# FASCICULE DE BREVET EUROPEEN

(11) **EP 2 448 998 B1**
(45) Date de publication et mention de la délivrance du brevet: **25.04.2018**
(21) Numéro de dépôt: 10726095.2
(22) Date de dépôt: 24.06.2010
(51) Int. Cl.: C08G 69/42, C08L 77/00, C08L 101/00

(54) **POLYAMIDE MODIFIE, PROCEDE DE PREPARATION, ARTICLE OBTENU A PARTIR DE CE POLYAMIDE**
MODIFIZIERTES POLYAMID, HERSTELLUNGSVERFAHREN DAFÜR UND AUS DIESEM POLYAMID HERGESTELLTER ARTIKEL
MODIFIED POLYAMIDE, PREPARATION METHOD THEREOF AND ARTICLE OBTAINED FROM SAID POLYAMIDE

(30) Priorité: 03.07.2009 FR 0954568
(43) Date de publication de la demande: 09.05.2012
(73) Titulaire: Rhodia Opérations, 93306 Aubervilliers (FR)
(72) Inventeur: TOURAUD, Franck, F-38780 Eyzin Pinet (FR); JEOL, Stéphane, F-69006 Lyon (FR)
(74) Mandataire: Schuck, Alexander
(86) Numéro de dépôt international: PCT/EP2010/058978
(87) Numéro de publication internationale: WO 2011/000764

(56) Documents cités:
- GB-A- 1 161 411
- US-A- 3 654 237
- US-A- 3 951 923
- US-A- 6 037 421

## Description

La présente invention concerne un polyamide modifié par un composé contenant un groupement sulfonate, ainsi qu'un procédé de préparation de ce polyamide, et des articles obtenus à partir de ce polyamide modifié.

L'invention concerne plus particulièrement un polyamide modifié obtenu à partir d'un composé aromatique sulfonate monofonctionnel notamment.

Les polymères thermoplastiques sont des matières premières susceptibles d'être transformées par moulage, moulage par injection, injection soufflage, extrusion, extrusion/soufflage, filage ou filmage, notamment en de multiples articles tels que des pièces (par exemple pour l'automobile, l'électronique) soufflées, extrudées, ou moulées, des fils, des fibres ou des films...

Il existe au moins deux contraintes majeures dans toutes ces filières de transformation de polymères thermoplastiques.

La première de ces contraintes est que les polymères thermoplastiques mis en oeuvre doivent être caractérisés, à l'état fondu, par une viscosité ou un comportement rhéologique compatible avec les procédés de mise en forme susvisés. Ces polymères thermoplastiques doivent être suffisamment fluides lorsqu'ils sont en fusion, pour pouvoir être acheminés et manipulés aisément et rapidement dans certaines machines de mise en forme comme les presses à injecter notamment. Il est connu dans l'art antérieur qu'une diminution de la viscosité à l'état fondu des polymères thermoplastiques peut être obtenue par une diminution de leur masse molaire. Ce qui a pour effet de faciliter leur mélangeage avec des charges diverses et/ou leur mise en oeuvre.

L'autre contrainte qui pèse sur les compositions polymères thermoplastiques est liée aux qualités mécaniques qu'ils doivent présenter après avoir été fondus, mis en forme et durcis par refroidissement. Ces qualités mécaniques sont notamment les propriétés thermomécaniques. Il est connu dans l'art antérieur qu'une réduction de la masse molaire d'un polymère thermoplastique s'accompagne d'une diminution des propriétés thermomécaniques et mécaniques.

Parmi les polymères thermoplastiques, les polyamides sont des polymères présentant un intérêt industriel et commercial important, en particulier les polyamides aliphatiques. Ces polyamides aliphatiques sont facilement synthétisables et transformables en voie fondue. Toutefois, on cherche toujours à améliorer leurs propriétés mécaniques, en particulier thermomécaniques, tout en conservant une certaine facilité de mise en oeuvre par les techniques de transformation usuelles précédemment citées.

Différents leviers sont employés pour moduler les propriétés de ces polyamides comme la composition, la structure, l'additivation etc. L'homme de l'art cherche à obtenir différents compromis de propriétés, combinant à la fois une bonne processabilité (fluidité), tout en conservant des propriétés applicatives satisfaisantes, comme par exemple, la tenue mécanique, la stabilité dimensionnelle, une faible reprise en eau, un effet barrière aux gaz ou essence, etc ...

De façon surprenante la Demanderesse a mis au point un polyamide modifié par un composé sulfonate monofonctionnel qui présente ce compromis de propriétés. On observe notamment qu'il est possible de réduire la masse moléculaire d'un polyamide par l'ajout d'un composé sulfonate monofonctionnel et donc ainsi accroitre sa viscosité en fondu sans toutefois diminuer, et même au contraire en augmentant, les propriétés thermomécaniques et mécaniques.

Ainsi, l'invention propose, dans un premier objet, un polyamide modifié par un composé contenant un groupement sulfonate et étant chimiquement lié à la chaîne polymère, le polyamide comprenant au moins une unité contenant un groupement sulfonate, de formule (I) suivante :

-L-Z-A-Y- SO₃X (I)

dans laquelle :
- XO₃S représente SO₃H ou SO₃M, M étant un groupement qui remplace le proton H⁺ de SO₃H pour former un groupe salifié inactif
- -L-Z- est un radical issu de la condensation de deux fonctions réactives F₁ et F₂ telles que
- F₁ est le précurseur du radical -L- et F₂ le précurseur du radical -Z-,
- A est une liaison covalente ou un radical hydrocarboné aliphatique pouvant comprendre des hétéroatomes et comprenant de 1 à 20 atomes de carbone.
- Y est un radical aromatique pouvant comprendre des hétéroatomes. les dites unités étant présentes selon une proportion au moins égale à 5% molaire par rapport au nombre total de moles d'unités constituant la chaîne polymérique.

Selon un second objet, l'invention propose un procédé de préparation du polyamide modifié ci-dessus, par introduction d'un composé monofonctionnel contenant un groupement sulfonate dans le milieu réactionnel à l'état fondu.

Enfin, selon un troisième objet, l'invention propose une composition comprenant ce polyamide modifié et un article obtenu par mise en forme du polyamide modifié ci-dessus.

L'invention concerne tout d'abord un polyamide modifié par un composé contenant un groupement sulfonate et étant chimiquement lié à la chaîne polymère.

Par « chimiquement lié » on entend lié par une liaison covalente.

Le polyamide modifié de l'invention comprend au moins une unité contenant un groupement sulfonate, de formule (I) suivante :

-L-Z-A-Y- SO₃X (I)

dans laquelle :
XO₃S représente SO₃H ou SO₃M, M étant un groupement qui remplace le proton H⁺ de SO₃H pour former un groupe salifié inactif
-L-Z- est un radical issu de la condensation de deux fonctions réactives F₁ et F₂ telles que
F₁ est le précurseur du radical -L- et F₂ le précurseur du radical -Z-,
A est une liaison covalente ou un radical hydrocarboné aliphatique pouvant comprendre des hétéroatomes et comprenant de 1 à 20 atomes de carbone.
Y est un radical aromatique pouvant comprendre des hétéroatomes.

Ces groupements sulfonate sont capables d'interagir par des liaisons non covalentes mais de haute énergie (liaisons H et/ou ioniques et/ou complexation métallique notamment) avec un ou plusieurs éléments du polyamide tels des fonctions amine et acide résiduelles en extrémités de chaînes, des fonctions amide centrales, d'autres groupements sulfonate ou encore avec d'autres éléments présents dans le polyamide (hétéroatomes comme, par exemple, des fonctions hydroxyle, éther, amine secondaire ou tertiaire,...). Ces groupements sulfonate permettent par ces interactions d'augmenter les propriétés mécaniques et notamment thermomécaniques du polyamide.

F₁ est avantageusement une fonction acide ou une fonction amine ou leurs dérivés. Par « fonction acide » on entend notamment une fonction acide carboxylique ou dérivée, telles que chlorure d'acide, anhydride d'acide, amide, ester.

F₂ est avantageusement une fonction réactive avec une fonction acide, amine ou dérivée. F₂ est de préférence choisie parmi -Hal (Hal signifie halogène), ), -COHal, -COOR, -anhydride, -CONRR', -CO-R, -NRR', -N=C=O, - OR, -NR-CO-NR'R", -O-CO-OR, -O-CO-NRR', -NR-CO-OR', -SR, R, R' et R", identiques ou différents, étant un atome d'hydrogène ou un radical alkyle, linéaire ou branché, comprenant de 1 à 18 atomes de carbone.

Avantageusement le radical Y est un radical aromatique.

Selon un mode de réalisation particulier de l'invention, -Z- est un groupement choisi parmi -NR-, -O- et -CO-, =CH-R-, -CO-O-, -CO-NH-, R étant l'hydrogène ou un radical alkyle de 1 à 18 atomes de carbone, de préférence entre 1 et 4 atomes de carbone.

Par groupe salifié « inactif » on entend un groupe salifié qui ne réagit pas avec des fonctions amine ou des fonctions acide, en particulier avec les fonctions amine et acide des monomères à l'origine du polyamide de l'invention.

M peut notamment être choisi parmi les métaux alcalins (dont notamment Li, Na, K, Cs), les métaux alcalino-terreux (dont notamment Ca, Mg, Ba), les métaux de transition (dont notamment Ti, Zr, Cr, Mn, Fe, Co, Ni, Cu, Zn, Ag), les métaux pauvres (dont notamment Al, Pb, Sn, Ga), les métalloïdes (dont notamment Sb, Ge, Si), les terres rares, tout autre type de cation comme les ammonium NH₄⁺, etc.

M est avantageusement un métal alcalin de préférence le sodium ou le lithium, un métal alcalino-terreux de préférence le calcium ou le magnésium, ou un métal choisi parmi le cuivre, le zinc ou l'aluminium.

Selon un mode de réalisation particulier de l'invention, -L-Z- est -NH-CO- ou -CO-NH-.

Avantageusement l'unité -L-Z-A-Y-SO₃X est une unité monosulfonate aromatique.

Par « unité sulfonate aromatique », on entend une unité comportant un groupement sulfonate aromatique.

Par « groupement sulfonate aromatique », on entend une fonction sulfonate rattachée à un atome de carbone faisant partie d'un cycle aromatique.

Selon un mode de réalisation particulier de l'invention, le polyamide modifié est obtenu en mettant en oeuvre un composé aromatique monofonctionnel de formule (II) suivante : 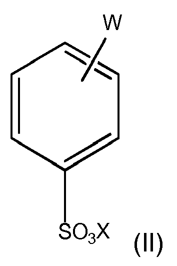 dans laquelle :
- XO₃S représente SO₃H ou SO₃M, M étant un groupement qui remplace le proton H⁺ de SO₃H pour former un groupe salifié inactif

-W étant -A-F₂ avec A tel que défini ci-dessus et F₂ étant une fonction réactive avec une fonction acide, amine ou dérivée, de préférence F₂ étant choisie parmi -Hal (Hal signifie halogène), ), -COHal, -COOR, -anhydride, -(CONRR') -CO-R, -NRR', -N=C=O, -OR, -NR-CO-NR'R", -O-CO-OR, -O-CO- NRR', -NR-CO-OR', -SR, R, R' et R", identiques ou différents, étant un atome d'hydrogène ou un radical alkyle, linéaire ou branché, comprenant de 1 à 18 atomes de carbone.

Comme exemples de composé aromatique monofonctionnel sulfonate, on peut citer le sodium-4-carboxybenzène sulfonate, le sodium-3-carboxybenzène sulfonate, le sodium-2-carboxybenzène sulfonate, le lithium-3-carboxybenzène sulfonate, le potassium-3- carboxybenzène sulfonate, le sodium-3-carbométhoxybenzène sulfonate, le potassium-2-carbopropoxybenzène sulfonate, le sodium-2-carbométhoxyéthylbenzène sulfonate, le potassium-3-aminométhylbenzène sulfonate, le sodium-2-aminoéthylbenzène sulfonate et le potassium-3-aminopropylbenzène sulfonate.

Avantageusement le composé aromatique monofonctionnel est le sodium-3-carboxybenzène sulfonate.

Lorsque -F₂ est -CHO, le composé aromatique monofonctionnel peut par exemple être un sel de métal alcalin (en particulier Li) du 2-formyl-benzène-1-sulphonique acide.

Les polyamides thermoplastiques sont obtenus soit par réaction entre deux monomères différents, soit par polycondensation d'un seul monomère. L'invention s'applique d'une part aux polyamides issus de deux monomères différents, dont le polyamide le plus important est le poly(hexaméthylène adipamide). Bien entendu, ces polyamides peuvent être obtenus à partir d'un mélange de diacides et de diamines. Ainsi, dans le cas du poly(hexaméthylène adipamide), les monomères principaux sont l'hexaméthylène diamine et l'acide adipique. Toutefois, ces monomères peuvent comprendre d'autres monomères diamines ou diacides ou même des monomères aminoacides ou lactames.

L'invention s'applique d'autre part aux polyamides issus d'un seul monomère, dont le polyamide le plus important est le polycaprolactame. Bien entendu, ces polyamides peuvent être obtenus à partir d'un mélange de lactames et/ou aminoacides. Ainsi, dans le cas du polycaprolactame, le monomère principal est le caprolactame. Toutefois, ces monomères peuvent comprendre d'autres monomères aminoacides ou lactames ou même des monomères diamines ou diacides.

Les diacides à l'origine des unités diacides carboxyliques du polyamide de l'invention peuvent être des diacides aliphatiques, cycloaliphatiques, arylaliphatiques ou aromatiques, contenant ou non des hétéroatomes, linéaires ou ramifiés, saturés ou non.

Par diacide arylaliphatique on entend un diacide dont au moins une des fonctions acide n'est pas rattachée à un atome de carbone faisant partie d'un cycle aromatique.

Selon un mode de réalisation particulier du procédé de l'invention, le diacide est un diacide aliphatique. L'acide aliphatique peut par exemple être choisi parmi l'acide oxalique, maléique, succinique, pimélique, azélaïque. Il peut également comprendre des insaturations, c'est le cas par exemple de l'acide maléique ou fumarique.

Les diacides dicarboxyliques peuvent également être choisis parmi l'acide succinique, l'acide glutarique, l'acide adipique, l'acide subérique, l'acide sébacique, l'acide dodécanedioïque, l'acide brassylique; l'acide 1,2-ou 1,3-cyclohexane dicarboxylique ; l'acide 1,2-ou 1,3-phénylène diacétique ; l'acide 1,2-ou 1,3-cylohexane diacétique ; l'acide isophthalique ; l'acide téréphthalique ; l'acide 4,4'-benzophénone dicarboxylique; l'acide 2,5-naphthalène dicarboxylique; et l'acide p-t-butyl isophthalique. L'acide dicarboxylique préféré est l'acide adipique.

Les diacides carboxyliques peuvent également contenir des groupements fonctionnels non réactifs vis-à-vis des fonctions du polyamide.

Dans le cadre de l'invention, des mélanges de différents diacides peuvent être mis en oeuvre.

Les diamines à l'origine des unités diamines du polyamide de l'invention peuvent être des diamines aliphatiques, cycloaliphatiques, arylaliphatiques ou aromatiques, contenant ou non des hétéroatomes, linéaires ou ramifiées, saturées ou non. De préférence ces diamines sont aliphatiques.

Par diamine arylaliphatique on entend une diamine dont au moins une des fonctions amine n'est pas rattachée à un atome de carbone faisant partie d'un cycle aromatique.

Des diamines aliphatiques convenables comprennent des diamines aliphatiques à chaîne droite, telles que le 1,10-diaminodécane, des diamines aliphatiques à chaîne ramifiée, telles que le 2-méthyl-1,6-diaminohexane, et des diamines cycloaliphatiques, telles que les di (aminométhyl) cyclohexanediamines.

La chaîne aliphatique peut contenir des hétéro-atomes comme le soufre ou l'oxygène, tel que représenté par la 3,3'- éthylènedioxybis(propylamine), et elle peut aussi porter des substituants, tels que des atomes d'halogène, qui ne réagissent pas dans les conditions de polymérisation. Elle peut présenter un caractère polymérique, par exemple il peut s'agir d'une chaîne polyéther, silicone, etc...

On peut citer à titre d'exemple de diamines arylaliphatiques convenables dans le cadre de l'invention la méta-xylylène diamine ou la paraxylylène diamine.

Les diamines peuvent par exemple être choisies parmi l'hexaméthylène diamine ; la butane diamine, la pentane diamine ; la 2-méthyl pentaméthylène diamine ; la 2-méthyl hexaméthylène diamine ; la 3-méthyl hexa-méthylène diamine ; la 2,5-diméthyl hexaméthylène diamine ; la 2,2-diméthylpentaméthylène diamine ; la nonane diamine ; la 5-méthylnonane diamine ; la dodécaméthylène diamine ; la 2,2,4-et 2,4,4-triméthyl hexaméthylène diamine ; la 2,2,7,7-tétraméthyl octaméthylène diamine ; l'isophorone diamine ; le diaminodicyclohexyl méthane et les diamines aliphatiques en C2 -C16 qui peuvent être substituées par un ou plusieurs groupements alkyles. La diamine préférée est l'hexaméthylène diamine.

Les diamines peuvent également contenir des groupements fonctionnels non réactifs vis-à-vis des fonctions du polyamide.

Des mélanges de diamines peuvent être aussi utilisés dans la présente invention.

Les lactames ou aminoacides à l'origine des unités aminocarboxylique acide du polyamide modifié de l'invention sont de préférence aliphatiques, ils peuvent contenir des hétéroatomes ou non, être linéaires ou ramifiés, saturés ou non. Les lactames ou aminoacides peuvent également contenir des groupements fonctionnels non réactifs vis-à-vis des fonctions du polyamide.

A titre d'exemple de tels lactames ou aminoacides, on peut citer le caprolactame, l'acide 6-aminohexanoïque, l'acide 5-aminopentanoïque, l'acide 7-aminoheptanoïque, l'acide aminoundécanoïque, le dodécanolactame.

Dans le cadre de l'invention, des mélanges de différents lactames ou aminoacides peuvent être mis en oeuvre.

Le polyamide modifié de l'invention comprend au moins une unité contenant un groupement sulfonate telle que décrite ci-dessus. Cette unité est présente selon une proportion au moins égale à 3% molaire par rapport au nombre total de moles d'unités constituant la chaîne polymérique, préférentiellement au moins 5 % molaire. Les unités constituant la chaîne polymérique peuvent être par exemple les unités diacides carboxyliques, les unités diamines, les unités aminocarboxyliques acide. Au sens de l'invention, elles ne comprennent pas les unités contenant un groupement sulfonate de formule (1).

De préférence l'unité contenant un groupement sulfonate est présente selon une proportion au moins égale à 3% molaire, plus préférentiellement au moins égale à 5% molaire, par rapport au nombre total de moles d'unités diacide carboxylique ou d'unités diamine, et/ou d'unités aminocarboxylique acide dans la chaîne polymérique.

Par mole d'unité diacide carboxylique ou par mole d'unité diamine, on entend dans le cas de la mise en oeuvre d'un mélange diacide/diamine, une mole de diacide et une mole de diamine mises en oeuvre pour préparer le polyamide, en d'autres termes on entend une mole du sel diacide/diamine mise en oeuvre pour la préparation du polyamide. Par mole d'unité aminocarboxylique acide, on entend une mole d'aminoacide ou une mole de lactame mise en oeuvre pour préparer le polyamide.

Dans le cas de la mise en oeuvre d'un mélange diamine/diacide, si l'un des deux monomères (diacide ou diamine) est utilisé en excès par rapport à l'autre, on réalise le calcul de la proportion molaire d'unité contenant un groupement sulfonate par rapport au nombre de moles d'unités issues du monomère excédentaire.

Avantageusement cette proportion est supérieure ou égale à 5%.

L'invention concerne également un procédé de préparation du polyamide modifié décrit ci-dessus, par introduction d'un composé monofonctionnel contenant un groupement sulfonate dans le milieu réactionnel.

Le composé monofonctionnel contenant un groupement sulfonate peut être introduit à tout moment avant, pendant ou après le procédé de polymérisation du polyamide, selon toute méthode connue de l'homme du métier.

Il peut s'agir d'un procédé de préparation à l'état fondu, en solution, en phase solide, par extrusion réactive etc.

Avantageusement le polyamide modifié est préparé par introduction d'un composé monofonctionnel contenant un groupement sulfonate, dont la fonction peut réagir avec une fonction amine ou acide, dans le milieu réactionnel à l'état fondu.

Les fonctions pouvant réagir avec une fonction amine sont notamment les fonctions acide, cétone, aldéhyde, hydroxyle, halogène, isocyanate, carbonate, urée ou leurs dérivés.

Les groupements sulfonate de l'invention ne sont pas considérés comme des fonctions réagissant chimiquement avec les fonctions amine.

La fonction sulfonate peut être attachée à un radical hydrocarboné aromatique, aliphatique ou cycloaliphatique. Le radical hydrocarboné peut par exemple être interrompu par des groupements éther, sulfure, sulfone. Notamment, il peut s'agir de sels d'alkylsulfonate, d'arylsulfonate, d'aryloxyalkylsulfonate, d'alkyloxyarylsulfonate, d'arylsulfonamidoalkylsulfonate. Le radical hydrocarboné interrompu ou non comporte une seule fonction pouvant réagir avec une fonction amine ou acide. Cette fonction, dans le cas d'un radical aromatique peut être ou non rattachée directement au radical aromatique.

Avantageusement le composé monofonctionnel contenant un groupement sulfonate est un composé aromatique monofonctionnel.

Tout ce qui a été décrit ci-dessus concernant les unités contenant un groupement sulfonate, s'applique ici de façon analogue pour les composés monofonctionnels contenant un groupement sulfonate.

En particulier l'invention concerne un procédé de préparation du polyamide modifié, par polymérisation à l'état fondu des monomères suivants :
A) au moins un composé monofonctionnel contenant un groupement sulfonate, dont la fonction peut réagir avec une fonction amine ou acide
B) au moins un composé ou un mélange de composés choisi parmi :
   B1) un mélange de diacide et de diamine
   B2) un lactame ou un aminoacide
   la proportion molaire de monomères A) par rapport aux monomères B) est au moins égale à 3%, plus préférentiellement au moins égale à 5%.

Des monomères multifonctionnels comprenant au moins trois fonctions, identiques ou différentes, réactives avec les fonctions acides ou amine, peuvent également être mises en oeuvre.

Tout ce qui a été décrit ci-dessus concernant les diacides, les diamines, les lactames et aminoacides s'applique ici à l'identique pour les monomères du procédé de l'invention.

Avantageusement une proportion stoechiométrique de fonctions acides et de fonctions amine apportées par les monomères est introduite dans le milieu de polymérisation. Ceci permet l'obtention d'un polymère de masse moléculaire suffisante pour être mis en oeuvre dans différentes applications, et présentant la fonctionnalité souhaitée.

Par l'expression « polymérisation à l'état fondu » on entend que la polymérisation est réalisée à l'état liquide, et que le milieu de polymérisation ne contient pas de solvant autre que de l'eau, éventuellement. Le milieu de polymérisation peut par exemple être une solution aqueuse comprenant les monomères, ou un liquide comprenant les monomères.

Avantageusement le milieu de polymérisation comprend de l'eau comme solvant. Cela facilite l'agitation du milieu, et donc son homogénéité.

Le milieu de polymérisation peut également comprendre des additifs tels que des limiteurs de chaîne non fonctionnels tels que l'acide acétique, ou fonctionnels.

Le polyamide modifié de l'invention est généralement obtenu par polycondensation entre les monomères A), et B), pour former des chaînes polyamides, avec formation du produit d'élimination, en particulier l'eau, dont une partie peut se vaporiser.

Le polyamide modifié de l'invention est généralement obtenu, par chauffage à température et pression élevées, par exemple d'une solution aqueuse comprenant les monomères, ou d'un liquide comprenant les monomères, pour évaporer le produit d'élimination, en particulier l'eau (présente initialement dans le milieu de polymérisation et/ou formée lors de la polycondensation) tout en évitant toute formation de phase solide afin d'éviter une prise en masse.

La réaction de polycondensation est généralement effectuée à une pression d'environ 0,5-3,5 MPa (0,5-2,5 MPa) à une température d'environ 100-320°C (180-300°C). La polycondensation est généralement poursuivie en phase fondue à pression atmosphérique ou réduite de manière à atteindre le degré d'avancement souhaité.

Le produit de polycondensation est un polymère ou prépolymère fondu. Il peut comprendre une phase vapeur essentiellement constituée de vapeur du produit d'élimination, en particulier d'eau, susceptible d'avoir été formée et/ou vaporisée.

Ce produit peut être soumis à des étapes de séparation de phase vapeur et de finition afin d'atteindre le degré de polycondensation désiré. La séparation de la phase vapeur peut par exemple être réalisée dans un dispositif de type cyclone. De tels dispositifs sont connus.

La finition consiste à maintenir le produit de polycondensation à l'état fondu, sous une pression voisine de la pression atmosphérique ou sous pression réduite, pendant un temps suffisant pour atteindre le degré d'avancement désiré. Une telle opération est connue de l'homme du métier. La température de l'étape de finition est avantageusement supérieure ou égale à 100°C et dans tous les cas supérieure à la température de solidification du polymère. Le temps de séjour dans le dispositif de finition est de préférence supérieur ou égal à 5 minutes.

Le produit de polycondensation peut également subir une étape de post-condensation en phase solide. Cette étape est connue de l'homme du métier et permet d'augmenter le degré de polycondensation à une valeur souhaitée.

Le procédé de l'invention est similaire dans ses conditions au procédé classique de préparation de polyamide du type de ceux obtenus à partir de diacides dicarboxyliques et de diamines, en particulier du procédé de fabrication de polyamide 66 à partir d'acide adipique et d'hexaméthylène diamine. Ce procédé de fabrication de polyamide 66 est connu de l'homme du métier. Le procédé de fabrication de polyamide du type de ceux obtenus à partir de diacides dicarboxyliques et de diamines utilise généralement comme matière première, un sel obtenu par un mélange en quantité stoechiométrique en général dans un solvant comme l'eau, d'un diacide avec une diamine. Ainsi, dans la fabrication du poly(hexaméthylène adipamide), l'acide adipique est mélangé avec de l'hexaméthylène diamine généralement dans de l'eau pour obtenir de l'adipate d'hexaméthylène diammonium plus connu sous le nom de sel Nylon ou "Sel N".

Ainsi, lorsque le procédé de l'invention met en oeuvre un diacide et une diamine, ces composés peuvent être introduits, au moins en partie, sous la forme d'un sel de diacide et de diamine. En particulier lorsque le diacide est l'acide adipique et la diamine l'hexaméthylène diamine, ces composés peuvent être introduits au moins en partie sous forme de sel N. Ceci permet d'avoir un équilibre stoechiométrique. De même lorsque le composé A) est un acide, le composé A) et la diamine peuvent être introduits sous forme de sel. Ceci est également vrai lorsque le composé A) est une amine : le composé A) et le diacide peuvent être introduits sous forme de sel.

Le polyamide modifié obtenu à la fin de l'étape de finition peut être refroidi et mis sous forme de granulés.

Le polyamide modifié obtenu par le procédé de l'invention sous forme fondue peut être directement mis en forme ou être extrudé et granulé, pour une mise en forme ultérieure après fusion.

Le polyamide modifié de l'invention présente l'avantage d'être aisément transformable en voie fondue, comme les polyamides aliphatiques par exemple, ce qui facilite sa mise en forme. De plus il présente des propriétés thermomécaniques améliorées, par exemple il présente une température de transition vitreuse plus élevée que les polyamides aliphatiques.

Le polyamide de l'invention peut être sous forme d'une composition à base du polyamide modifié comme matrice et comprenant des additifs, tels que des charges de renfort, des ignifugeants, des stabilisants aux UV, à la chaleur, des matifiants tels que le dioxyde de titane, des pigments, des colorants, des particules métalliques, etc...

Le polyamide modifié de l'invention peut être utilisé comme matière première dans le domaine des plastiques techniques, par exemple pour la réalisation d'articles moulés par injection ou par injection/soufflage, extrudés par extrusion classique ou par extrusion soufflage, ou de films ou poudres.

Le polyamide modifié de l'invention peut également être mis sous forme de fils, fibres, filaments par filage en fondu.

Le polyamide de l'invention peut également être utilisé comme élément d'une composition. Il peut particulièrement être utilisé comme additif dans des compositions polymère thermoplastique comprenant une matrice thermoplastique. Il intervient dans la composition notamment comme agent de renfort. La matrice thermoplastique est un polymère thermoplastique.

A titre d'exemple de polymères pouvant convenir, on cite : les polylactones telles que la poly(pivalolactone), la poly(caprolactone) et les polymères de la même famille; les polyuréthanes obtenus par réaction entre des diisocyanates comme le 1,5-naphtalène diisocyanate; le p-phénylène diisocyanate, le m-phénylène diisocyanate, le 2,4-toluène diisocyanate, le 4,4'- diphénylméthane diisocyanate, le 3,3'-diméthyl-4,4'-diphényl-méthane diisocyanate, le 3,3-'diméthyl-4,4'-biphényl diisocyanate, le 4,4'- diphénylisopropylidène diisocyanate, le 3,3'-diméthyl-4,4'-diphényl diisocyanate, le 3,3'-diméthyl-4,4'-diphénylméthane diisocyanate, le 3,3'-diméthoxy-4,4'-biphényl diisocyanate, le dianisidine diisocyanate, le toluidine diisocyanate, le hexaméthylène diisocyanate, le 4,4'-diisocyanatodiphénylméthane et composés de la même famille et les diols à longues chaînes linéaires comme le poly(tétraméthylène adipate), le poly(éthylène adipate), le poly(1,4 -butylène adipate), le poly(éthylène succinate), le poly(2,3-butylène succinate), les polyéther diols et composés de la même famille; les polycarbonates comme le poly[méthane bis(4-phényl) carbonate], le poly[1,1-éther bis(4-phényl) carbonate], le poly[diphénylméthane bis(4-phényl)carbonate], le poly[1,1-cyclohexane bis(4-phényl)carbonate] et polymères de la même famille; les polysulfones; les polyéthers; les polycétones; les polyamides comme le poly(4-amino butyrique acide), le poly(héxaméthylène adipamide), le poly(acide 6-aminohéxanoïque), le poly(m-xylylène adipamide), le poly(p-xylylène sébacamide), le poly(2,2,2-triméthyl héxaméthylène téréphtalamide), le poly(métaphénylène isophtalamide), le poly(p-phénylène téréphtalamide), et polymères de la même famille; les polyesters comme le poly(éthylène azélate), le poly(éthylène-1,5-naphtalate, le poly(1,4-cyclohexane diméthylène téréphtalate), le poly(éthylène oxybenzoate), le poly(para-hydroxy benzoate), le poly(1,4-cyclohéxylidène diméthylène téréphtalate), le poly(1,4-cyclohéxylidène diméthylène téréphtalate), le polyéthylène téréphtalate, le polypropylène téréphtalate, le polybutylène téréphtalate et les polymères de la même famille; les poly(arylène oxydes) comme le poly(2,6-diméthyl-1,4-phénylène oxyde), le poly(2,6-diphényl-1,4-phénylène oxyde) et les polymères de la même famille ; les poly(arylène sulfides) comme le poly(phénylène sulfide) et les polymères de la même famille; les polyétherimides; les polymères vinyliques et leurs copolymères comme l'acétate de polyvinyle, l'alcool polyvinylique, le chlorure de polyvinyle; le polyvinyle butyral, le chlorure de polyvinylidène, les copolymères éthylène- acétate de vinyle, et les polymères de la même famille; les polymères acryliques, les polyacrylates et leurs copolymèrés comme l'acrylate de polyéthyle, le poly(n-butyl acrylate), le polyméthylméthacrylate, le polyéthyl méthacrylate, le poly(n-butyl méthacrylate), le poly(n-propyl méthacrylate), le polyacrylamide, le polyacrylonitrile, le poly(acide acrylique), les copolymères éthylène- acide acrylique, les copolymères éthylène- alcool vinylique, les copolymères de l'acrylonitrile, les copolymères méthacrylate de méthyle - styrène, les copolymères éthylène-acrylate d'éthyle, les copolymères méthacrylate-butadiène-styrène, l'ABS, et les polymères de la même famille; les polyoléfines comme le poly(éthylène) basse densité, le poly(propylène), le poly(éthylène) chloré basse densité, le poly(4-méthyl-1-pentène), le poly(éthylène), le poly(styrène), et les polymères de la même famille; les ionomères; les poly(épichlorohydrines); les poly(uréthane) tels que produits de polymérisation de diols comme la glycérine, le triméthylol-propane, le 1,2,6-hexanetriol, le sorbitol, le pentaérythritol, les polyéther polyols, les polyester polyols et composés de la même famille avec des polyisocyanates comme le 2,4-tolylène diisocyanate, le 2,6-tolylène diisocyanate, le 4,4'-diphénylméthane diisocyanate, le 1,6-héxaméthylène diisocyanate, le 4,4'-dicycohéxylméthane diisocyanate et les composés de la même famille; et les polysulfones telles que les produits de réaction entre un sel de sodium du 2,2-bis(4-hydroxyphényl) propane et de la 4,4'-dichlorodiphényl sulfone; les résines furane comme le poly(furane); les plastiques cellulose-ester comme l'acétate de cellulose, l'acétate-butyrate de cellulose, propionate de cellulose et les polymères de la même famille; les silicones comme le poly(diméthyl siloxane), le poly(diméthyl siloxane co-phénylméthyl siloxane), et les polymères de la même famille; les mélanges d'au moins deux des polymères précédents.

Selon une variante particulière de l'invention, la matrice thermoplastique est un polymère comprenant des chaînes macromoléculaires étoiles ou H, et le cas échéant des chaînes macromoléculaires linéaires. Les polymères comprenant de telles chaînes macromoléculaires étoiles ou H sont par exemple décrits dans les documents FR 2 743 077, FR 2 779 730, US 5 959 069, EP 0 632 703, EP 0 682 057 et EP 0 832 149.

Selon une autre variante particulière de l'invention, la matrice thermoplastique de l'invention est un polymère de type arbre statistique, de préférence un copolyamide présentant une structure arbre statistique. Ces copolyamides de structure arbre statistique ainsi que leur procédé d'obtention sont notamment décrits dans le document WO 99/03909.

La matrice thermoplastique de l'invention peut également être une composition comprenant un polymère thermoplastique linéaire et un polymère thermoplastique étoile, H et/ou arbre tels que décrits ci-dessus.

Les compositions de l'invention peuvent également comprendre un copolyamide hyperbranché du type de ceux décrits dans le document WO 00/68298.

Les compositions de l'invention peuvent également comprendre toute combinaison de polymère thermoplastique étoile, H, arbre, copolyamide hyperbranché décrit ci-dessus.

Comme autre type de matrice polymérique pouvant être mise en oeuvre dans le cadre de l'invention, on peut citer le polymères thermostables : ces polymères sont de préférence infusibles ou présentent un point de ramollissement supérieur à 180°C, de préférence ≥ 200°C, ou supérieur. Ces polymères thermostables peuvent par exemple être choisis parmi les polyamides aromatiques, les polyamides imide tels que les polytrimellamide -imide, ou les polyimides tels que les polyimides obtenus selon le document EP 0119185, connus dans le commerce sous la marque P84. Les polyamides aromatiques peuvent être tels que décrits dans le brevet EP 0360707. Ils peuvent être obtenus selon le procédé décrit dans le brevet EP 0360707.

Comme autre matrice polymérique, on peut citer également la viscose, la cellulose, l'acétate de cellulose etc.

La matrice polymérique de l'invention peut également être du type des polymères utilisés dans les adhésifs, tels que les copolymères d'acétates de vinyles plastisol, les latex acryliques, les latex uréthanes, les PVC plastisol etc.

Parmi ces matrices polymériques, on préfère tout particulièrement les polyamides semi-cristallins, tels que le polyamide 6, le polyamide 6.6, le polyamide 11, le polyamide 12, le polyamide 4, les polyamides 4-6, 6-10, 6-12, 6-36, 12-12, les polyamides semi-aromatiques obtenus à partir d'acide téréphtalique et/ou isophtalique tels que le polyamide commercialisé sous le nom commercial AMODEL; les polyesters tels que le PET, le PBT, le PTT; les polyoléfines tels que le polypropylène, le polyéthylène; les polyamides aromatiques, les polyamide imide ou les polyimides; les latex tels que les latex acryliques et uréthane; le PVC, la viscose, la cellulose, l'acétate de cellulose; leurs copolymères et alliages.

Les compositions peuvent contenir tous les autres additifs pouvant être utilisés, par exemple des charges de renfort, des ignifugeants, des stabilisants aux UV, à la chaleur, des matifiants tels que le dioxyde de titane.

Les compositions selon l'invention sont de préférence obtenues par mélange en phase fondue du polymère thermoplastique et du polyamide modifié. Le mélange peut par exemple être réalisé à l'aide d'un dispositif d'extrusion, par exemple un mélangeur à simple vis ou double vis.

La proportion pondérale de polyamide modifié dans la composition est avantageusement comprise entre 1 et 99%, de préférence comprise entre 5 et 30 %.

Les compositions selon l'invention peuvent être utilisées comme matière première dans le domaine des plastiques techniques, par exemple pour la réalisation d'articles moulés par injection ou par injection/soufflage, extrudés par extrusion classique ou par extrusion soufflage, ou de films.

Les compositions selon l'invention peuvent également être mises sous forme de fils, fibres, filaments par filage en fondu.

D'autres détails ou avantages de l'invention apparaîtront plus clairement à la vue des exemples donnés ci-dessous.

### EXEMPLES

Teneurs en groupements terminaux acide (GTC) et amine (GTA) : dosées par potentiométrie, exprimées en meq/kg.

Teneur en groupements terminaux sulfonate (GTS) : calculés à partir des quantités de réactifs introduits dans le réacteur de polymérisation.

Masse molaire moyenne en nombre Mn déterminée par la formule Mn=2.10⁶/(GTA+GTC+GTS) et exprimées en g/mol.

Le nombre d'extrémité de chaîne sulfonate par chaîne est calculé de la manière suivante : nombre sulfonate/chaine=GTS/((GTA+GTC+GTS)/2).

Température de fusion (T_{f}) et enthalpie associée (ΔHf), température de cristallisation au refroidissement (T_{c}) : déterminées par calorimétrie différentielle à balayage (DSC « Differential Scanning Calorimetry »), à l'aide d'un appareil Perkin Elmer Pyris 1, à une vitesse de 10°C/min.

Température de transition vitreuse (Tg) déterminées sur le même appareil à une vitesse de 40 °C/min.

### Exemple 1 comparatif : PA 66 non modifié

Dans un réacteur de polymérisation sont introduits 92,6 kg (353 mol) de sel N (sel 1:1 d'hexaméthylène diamine et d'acide adipique), 84 kg d'eau déminéralisée et 6,4 g d'agent antimousse Silcolapse 5020®.

Le polyamide 66 est fabriqué selon un procédé standard de polymérisation de type polyamide 66, avec 30 minutes de finition.

Le polymère obtenu est coulé sous une pression de 5 bars sous la forme de jonc, refroidi et mis sous forme de granulé par coupe des joncs. Environ 70 kg de polymère est récupéré.

Le polymère obtenu présente les caractéristiques suivantes : à mi-coulée, GTC = 70,2 meq/kg, GTA = 51,5 meq/kg, Mn = 16430 g/mol.

Le polyamide 66 est semi-cristallin et a les caractéristiques thermiques suivantes : Tg= 70,6 °C, Tc= 230,9 °C, Tf= 263,7 °C, ΔHf=68,4 J/g.

### Exemple 1 : préparation d'un polyamide 66 contenant 5 % molaire de SBA

Dans un réacteur de polymérisation sont introduits 87,2 kg (332,5 mol) de sel N (sel 1:1 d'hexaméthylène diamine et d'acide adipique), 4057 g de sodium 3-carboxybenzènesulfonate à 96,7% (SBA) (17,5 mol), 3398 g d'une solution d'hexaméthylène diamine (HMD) en solution dans l'eau à 32,48 % en poids (9,5 mol) et 83 kg d'eau déminéralisée et 6,4 g d'agent antimousse Silcolapse 5020®. La teneur molaire en composé sulfonate est égale à 17,5/(332,5+9,5)=5%.

Le polyamide contenant 5% molaire de SBA est fabriqué selon un procédé standard de polymérisation de type polyamide 66, avec 40 minutes de finition sous un vide de 70 mbar.

Le polymère obtenu est coulé sous une légère pression de 1,7 bars sous forme de jonc, refroidi et mis sous forme de granulé par coupe des joncs. 75 kg de granulés sont récupérés contre 70 kg pour l'exemple comparatif 1, et ce pour une pression de coulée bien plus faible, ce qui montre que le polyamide de l'invention a une plus grande fluidité.

Le polymère obtenu présente les caractéristiques suivantes : à mi-coulée, GTC =51,1 meq/kg, GTA = 44,1 meq/kg, GTS= 219 meq/kg, Mn = 6 370 g/mol. Le nombre d'extrémité de chaîne sulfonate par chaîne est en moyenne de 1,4.

Le polyamide obtenu est semi-cristallin et a les caractéristiques thermiques suivantes : Tg= 86,5°C, Tc= 228,2 °C, Tf= 259,5 °C, ΔHf= 71,2 J/g. Le polyamide terminé sulfonate, malgré une plus faible masse molaire, a une Tg largement supérieure d'environ 16 °C par rapport à celle du PA 66.

### Exemple 2 : préparation d'un polyamide 66 contenant 10% molaire de SBA

Dans un réacteur de polymérisation sont introduits 132,77 g (0,506 mol) de sel N (sel 1:1 d'hexaméthylène diamine et d'acide adipique), 12,73 g de sodium 3-carboxybenzènesulfonate à 99% (SBA) (0,056 mol), 12,20 g d'une solution d'hexaméthylène diamine (HMD) en solution dans l'eau à 32,25 % en poids (0,034 mol) et 127 g d'eau déminéralisée et 2 g d'agent antimousse. La teneur molaire en composé sulfonate est égale à 0,056/(0,506+0,034)=10%.

Le polyamide contenant 10% molaire de SBA est fabriqué selon un procédé standard de polymérisation de type polyamide 66, avec 30 minutes de finition sous un vide d'environ 10 mbar.

Le polymère obtenu est coulé sur un plateau, avec une très légère pression de 1,2 bar.

Le polymère obtenu présente les caractéristiques suivantes : GTC =108,7 meq/kg, GTA = 98,3 meq/kg, GTS= 435 meq/kg, Mn = 3120 g/mol. Le nombre d'extrémité de chaîne sulfonate par chaîne est en moyenne de 1,36.

Le polyamide obtenu est semi-cristallin et a les caractéristiques thermiques suivantes : Tg= 97,8°C, Tc= 213,7 °C, Tf= 251,8 °C, ΔHf= 63 J/g. Le polyamide terminé sulfonate, malgré une plus faible masse molaire, a une Tg largement supérieure d'environ 27 °C par rapport à celle du PA 66.

### Exemple 3 : préparation d'un polyamide 66 contenant 22% molaire de SBA

Dans un réacteur de polymérisation sont introduits 116,64 g (0,445 mol) de sel N (sel 1:1 d'hexaméthylène diamine et d'acide adipique), 25,17 g de sodium 3-carboxybenzenesulfonate à 99% (SBA) (0,111 mol), 20,81 g d'une solution d'hexaméthylène diamine (HMD) en solution dans l'eau à 32,25 % en poids (0,058 mol) et 120,6 g d'eau déminéralisée et 2 g d'agent antimousse. La teneur molaire en composé sulfonate est égale à 0,111/(0,445+0,058)=22%.

Le polyamide contenant 20% molaire de SBA est fabriqué selon un procédé standard de polymérisation de type polyamide 66, avec 30 minutes de finition sous un vide d'environ 30 mbar.

Le polymère obtenu est coulé sur un plateau, avec une très légère pression de 1,2 bar.

Le polymère obtenu présente les caractéristiques suivantes : GTC =232,4 meq/kg, GTA = 203,5 meq/kg, GTS= 855 meq/kg, Mn = 1550 g/mol. Le nombre d'extrémité de chaîne sulfonate par chaîne est en moyenne de 1,32.

Le polyamide obtenu est semi-cristallin et a les caractéristiques thermiques suivantes : Tg= 105,7°C, Tc= 183,2 °C, Tf= 239,6 °C, ΔHf= 45 J/g. Le polyamide terminé sulfonate, malgré une plus faible masse molaire, a une Tg largement supérieure d'environ 35 °C par rapport à celle du PA 66.

### Exemple 4 : préparation d'un PA 6 contenant 5% molaire de SBA

Dans un réacteur de polymérisation sont introduits 133,18 g (1,177 mol) de caprolactame, 13,9678 g de sodium 3-carboxybenzènesulfonate à 99% (SBA) (0,062 mol), 11,031 g d'une solution d'hexaméthylène diamine (HMD) en solution dans l'eau à 32,5 % en poids (0,031 mol) et 64,7 g d'eau déminéralisée et 2 g d'agent antimousse. La teneur molaire en composé sulfonate est égale à 0,062/(1,177+0,031 )=5%.

Le polyamide 6 contenant 5% molaire de SBA est fabriqué selon un procédé standard de polymérisation de type polyamide 6, avec 60 minutes de finition à pression atmosphérique.

Le polymère obtenu est coulé sur un plateau avec une très légère pression de 1,2 bar. Il est ensuite lavé 3 fois dans de l'eau chaude pour éliminer les monomères et oligomères résiduels.

Le polyamide obtenu est semi-cristallin et a les caractéristiques thermiques suivantes : Tg=77,3°C, Tc= 165,5°C, Tf= 207,2°C, ΔHf= 65J/g. Le polyamide 6 contenant 5% molaire de SBA a une Tg largement supérieure d'environ 20°C par rapport à celle d'un PA 6 non modifié (Tg=57,5°C).

### Exemple 5 comparatif : préparation d'un polyamide 66 terminé acide acétique

Dans un réacteur de polymérisation sont introduits 90,75 kg (345,93 mol) de sel N (sel 1:1 d'hexaméthylène diamine et d'acide adipique), 939 g d'acide acétique à 100% (15,65 mol), 3,05 kg d'une solution d'hexaméthylène diamine (HMD) en solution dans l'eau à 32,60 % en poids (8,56 mol) et 83,5 kg d'eau déminéralisée et 6,4 g d'agent antimousse Silcolapse 5020®.

Le polyamide 66 bloqué acide acétique est fabriqué selon un procédé standard de polymérisation de type polyamide 66, avec 30 minutes de finition. Le polymère obtenu est coulé sous forme de jonc, refroidi et mis sous forme de granulé par coupe des joncs.

Le polymère obtenu présente les caractéristiques suivantes : GTC = 59,9 meq/kg, GTA = 65,7 meq/ kg et GTB= 196 meq/kg (GTB=Groupements Terminaux Bloqués, dans ce cas par de l'acide acétique), Mn = 2.10⁶/(GTA+GTC+GTB) = 6 200 g/mol. Son IV= 56,2 mL/g. Le copolyamide est semi-cristallin et a les caractéristiques thermiques suivantes : Tc= 232,3°C, Tf=263,1 °C, ΔHf = 74,5 J/g.

### Exemple 6 : Mesure des propriétés thermomécaniques

Le module élastique E' à différentes températures est mesuré, par analyse mécanique en température, sur des éprouvettes injectées de polymère de l'exemple comparatif 1 et le polymère de l'exemple 1 selon l'invention et reporté dans le tableau 1 suivant :

**Tableau 1**

| **Polymère** | **Module E' à -20°C (GPa)** | **Module E' à 25°C (GPa)** | **Viscosité fondue à 280°C et 50 s-1 (Pa.s)** |
|---|---|---|---|
| Exemple 1 comparatif | 2,4 | 1,0 | 125 |
| Exemple 1 | 2,8 | 1,3 | 12,8 |

### Exemple 7 : Mesure du taux de cristallinité

Le taux de cristallinité a été comparé entre un polyamide selon l'invention et un polyamide modifié par un composé monosulfonaté difonctionnel (AISNa). On observe que le polyamide de l'exemple 1 présente un taux de cristallinité de 37,9 % alors qu'un polyamide 66 modifié par 5 % molaire d'AISNa (fabriqués dans les mêmes conditions) présente un taux de cristallinité de 28,9 % ; ce qui indique une diminution du module élastique à toutes les températures.

### Exemple 8 : Moulage par injection

Les polymères de l'exemple 1 et de l'exemple 5 comparatif présentant des masses moléculaires Mn similaires ont été utilisées dans un procédé de moulage par injection standard. Il apparait que le polymère de l'exemple 5 comparatif ne peut être convenablement injecté dans la mesure où sa haute fluidité entraine un débordement de la matière fondue hors du moule dans la chambre de moulage. Ce problème discriminant n'est pas rencontré avec le polyamide de l'exemple 1.

## Revendications

1. Polyamide modifié par un composé contenant un groupement sulfonate et étant chimiquement lié à la chaîne polymère, le polyamide comprenant au moins une unité contenant un groupement sulfonate, de formule (I) suivante :
-L-Z-A-Y- SO₃X (I)
dans laquelle :
- XO₃S représente SO₃H ou SO₃M, M étant un groupement qui remplace le proton H+ de SO₃H pour former un groupe salifié inactif,
- -L-Z- est un radical issu de la condensation de deux fonctions réactives F₁ et F₂ telles que
- F₁ est le précurseur du radical -L- et F₂ le précurseur du radical -Z-,
- A est une liaison covalente ou un radical hydrocarboné aliphatique pouvant comprendre des hétéroatomes et comprenant de 1 à 20 atomes de carbone,
- Y est un radical aromatique pouvant comprendre des hétéroatomes,
les dites unités étant présentes selon une proportion au moins égale à 5% molaire par rapport au nombre total de moles d'unités constituant la chaîne polymérique.

2. Polyamide modifié selon la revendication 1, **caractérisé en ce que** les dites unités sont présentes selon une proportion au moins égale à 5% molaire par rapport au nombre total de moles d'unités diacide carboxylique ou d'unités diamine, et/ou d'unités aminocarboxylique acide dans la chaîne polymérique.

3. Polyamide modifié selon l'une des revendications précédentes, **caractérisé en ce que** F₁ est une fonction acide ou une fonction amine ou leurs dérivés, et F₂ est une fonction réactive avec une fonction acide, amine ou dérivée, F₂ étant de préférence choisie parmi -Hal (Hal signifie halogène), -COHal, -COOR, -anhydride, -CONRR', -CO-R, -NRR', -N=C=O, -OR, -NR-CO-NR'R", -O-CO-OR, -O-CO-NRR', -NR-CO-OR', -SR, R, R' et R", identiques ou différents, étant un atome d'hydrogène ou un radical alkyle, linéaire ou branché, comprenant de 1 à 18 atomes de carbone.

4. Polyamide modifié selon l'une des revendications précédentes, **caractérisé en ce que** -Z- est un groupement choisi parmi -NR-, -O- et -CO-, =CH-R-, -CO-O-, -CO-NH-, R étant l'hydrogène ou un radical alkyle de 1 à 18 atomes de carbone, de préférence entre 1 et 4 atomes de carbone.

5. Polyamide modifié selon l'une des revendications précédentes, **caractérisé en ce que** M est choisi parmi les métaux alcalins et alcalino-terreux.

6. Polyamide modifié selon l'une des revendications précédentes, **caractérisé en ce que** -L-Z- est --NH-CO- ou -CO-NH-.

7. Polyamide modifié selon l'une des revendications précédentes, **caractérisé en ce qu'**il est obtenu en mettant en oeuvre un composé aromatique monofonctionnel de formule (II) suivante : 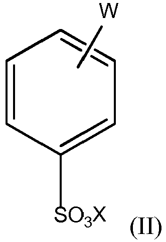 dans laquelle :
- XO₃S représente SO₃H ou SO₃M, M étant un groupement qui remplace le proton H⁺ de SO₃H pour former un groupe salifié inactif,
- -W étant -A-F₂ avec A tel que défini ci-dessus et F₂ étant choisie parmi - Hal (Hal signifie halogène), ), -COHal, -COOR, -anhydride, -CONRR', - CO-R, -NRR', -N=C=O, -OR, -NR-CO-NR'R", -O-CO-OR, -O-CO-NRR', -NR-CO-OR', -SR, R, R' et R", identiques ou différents, étant un atome d'hydrogène ou un radical alkyle, linéaire ou branché, comprenant de 1 à 18 atomes de carbone.

8. Polyamide modifié selon la revendication 7, **caractérisé en ce que** le composé aromatique mono fonctionnel est le sodium-3-carboxybenzène sulfonate.

9. Procédé de préparation du polyamide modifié selon l'une des revendications 1 à 8, par introduction d'un composé monofonctionnel contenant un groupement sulfonate, dont la fonction peut réagir avec une fonction amine ou acide dans le milieu réactionnel à l'état fondu.

10. Procédé selon la revendication 9, par polymérisation à l'état fondu des monomères suivants :
A) au moins un composé monofonctionnel contenant un groupement sulfonate, dont la fonction peut réagir avec une fonction amine ou acide
B) au moins un composé ou un mélange de composés choisi parmi :
B1) un mélange de diacide et de diamine
B2) un lactame ou un aminoacide
la proportion molaire de monomères A) par rapport aux monomères B) est au moins égale à 5%.

11. Procédé de préparation du polyamide modifié selon l'une des revendications précédentes, **caractérisé en ce qu'**une proportion stoechiométrique de fonctions acides et de fonctions amine apportées par les monomères est introduite dans le milieu de polymérisation.

12. Composition polymère thermoplastique comprenant :
a. le polyamide modifié selon l'une des revendications 1 à 8 ou obtenu par le procédé selon l'une des revendications 9 à 11
b. un polymère thermoplastique.

13. Composition polymère thermoplastique selon la revendication 12, **caractérisée en ce qu'**elle comprend entre 5 et 30% de polyamide modifié.

14. Article obtenu par mise en forme à partir du polyamide modifié selon l'une des revendications 1 à 8 ou obtenu par le procédé selon l'une des revendications 9 à 11, ou à partir de la composition selon la revendication 12 ou 13, de préférence par moulage, moulage par injection, injection/soufflage extrusion/soufflage, extrusion, filage ou filmage.

## Patentansprüche

1. Polyamid, modifiziert durch eine Verbindung, die eine Sulfonatgruppe enthält und chemisch an die Polymerkette gebunden ist, wobei das Polyamid mindestens eine Einheit mit einer Sulfonatgruppe umfasst, die folgende Formel (I) aufweist:
-L-Z-A-Y-SO₃X (I)
in der:
- XO₃S für SO₃H oder SO₃M steht, wobei M eine Gruppe ist, die das Proton H+ von SO₃H unter Bildung einer inaktiven versalzten Gruppe ersetzt,
- -L-Z- ein Rest ist, der sich aus der Kondensation von zwei reaktiven Funktionen F₁ und F₂ ergibt, derart, dass
- F₁ die Vorstufe des Rests -L- ist und F₂ die Vorstufe des Rests -Z- ist,
- A eine kovalente Bindung oder ein aliphatischer Kohlenwasserstoffrest, der Heteroatome enthalten kann und 1 bis 20 Kohlenstoffatome enthält, ist,
- Y ein aromatischer Rest, der Heteroatome enthalten kann, ist,
wobei die Einheiten in einem Anteil von mindestens 5 Mol-%, bezogen auf die gesamte Molzahl von Einheiten, aus denen die Polymerkette besteht, vorliegen.

2. Modifiziertes Polyamid nach Anspruch 1, **dadurch gekennzeichnet, dass** die Einheiten in einem Anteil von mindestens 5 Mol-%, bezogen auf die gesamte Molzahl von Dicarbonsäure-Einheiten oder Diamin-Einheiten und/oder Aminocarbonsäure-Einheiten in der Polymerkette, vorliegen.

3. Modifiziertes Polyamid nach einem der vorhergehenden Ansprüche, **dadurch gekennzeichnet, dass** F₁ eine Säurefunktion oder eine Aminfunktion oder eine abgeleitete Funktion ist und F₂ eine gegenüber einer Säurefunktion, Aminfunktion oder abgeleiteten Funktion reaktive Gruppe ist, wobei F₂ vorzugsweise aus -Hal (Hal bedeutet Halogen), -COHal, -COOR, -anhydrid, -CONRR', -CO-R, -NRR', -N=C=O, -OR, -NR-CO-NR'R ", -O-CO-OR, -O-CO-NRR', -NR-CO-OR' und -SR ausgewählt ist, wobei R, R' und R" gleich oder verschieden sind und ein Wasserstoffatom oder ein linearer oder verzweigter Alkylrest mit 1 bis 18 Kohlenstoffatomen sind.

4. Modifiziertes Polyamid nach einem der vorhergehenden Ansprüche, **dadurch gekennzeichnet, dass** - Z- eine Gruppe ist, die aus -NR-, -O- und -CO-, =C-R-, -CO-O- und -CO-NH- ausgewählte Gruppe ist, wobei R Wasserstoff oder ein Alkylrest mit 1 bis 18 Kohlenstoffatomen, vorzugsweise zwischen 1 und 4 Kohlenstoffatomen, ist.

5. Modifiziertes Polyamid nach einem der vorhergehenden Ansprüche, **dadurch gekennzeichnet, dass** M aus Alkali- und Erdalkalimetallen ausgewählt ist.

6. Modifiziertes Polyamid nach einem der vorhergehenden Ansprüche, **dadurch gekennzeichnet, dass** -L-Z- -NH-CO- oder -CO-NH- ist.

7. Modifiziertes Polyamid nach einem der vorhergehenden Ansprüche, **dadurch gekennzeichnet, dass** es durch Verwendung einer monofunktionellen aromatischen Verbindung der folgenden Formel (II): 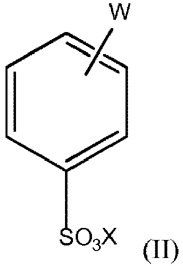 in der:
- XO₃S für SO₃H oder SO₃M steht, wobei M eine Gruppe ist, die das Proton H⁺ von SO₃H unter Bildung einer inaktiven versalzten Gruppe ersetzt,
- wobei -W -A-F₂ ist, wobei A wie oben definiert ist und F₂ aus -Hal (Hal bedeutet Halogen), -COHal, -COOR, -anhydrid, -CONRR', -CO-R, -NRR', -N=C=O, - OR, -NR-CO-NR'R", -O-CO-OR, -O-CO-NRR', -NR-CO-OR' und -SR ausgewählt ist, wobei R, R' und R" gleich oder verschieden sind und ein Wasserstoffatom oder ein linearer oder verzweigter Alkylrest mit 1 bis 18 Kohlenstoffatomen sind, erhalten wird.

8. Modifiziertes Polyamid nach Anspruch 7, **dadurch gekennzeichnet, dass** es sich bei der monofunktionellen aromatischen Verbindung um Natrium-3-carboxybenzolsulfonat handelt.

9. Verfahren zur Herstellung des modifizierten Polyamids nach einem der Ansprüche 1 bis 8 durch Eintragen einer monofunktionellen Verbindung mit einer Sulfonatgruppe, deren Funktion mit einer Amin- oder Säurefunktion reagieren kann, in das Reaktionsmedium in schmelzflüssigem Zustand.

10. Verfahren nach Anspruch 9 durch Schmelzepolymerisation der folgenden Monomere:
A) mindestens einer monofunktionellen Verbindung mit einer Sulfonatgruppe, deren Funktion mit einer Amin- oder Säurefunktion reagieren kann,
B) mindestens einer Verbindung oder einer Mischung von Verbindungen, ausgewählt aus:
B1) einer Mischung von Disäure und Diamin,
B2) einem Lactam oder einer Aminosäure,
wobei der molare Anteil von Monomeren A), bezogen auf die Monomere B), mindestens gleich 5 % ist.

11. Verfahren zur Herstellung des modifizierten Polyamids nach einem der vorhergehenden Ansprüche, **dadurch gekennzeichnet, dass** ein durch die Monomere beigebrachter stöchiometrischer Anteil von Säurefunktionen und Aminfunktionen in das Polymerisationsmedium eingetragen wird.

12. Thermoplastische Polymerzusammensetzung, umfassend:
a. das modifizierte Polyamid nach einem der Ansprüche 1 bis 8 oder das durch das Verfahren nach einem der Ansprüche 9 bis 11 erhaltene modifizierte Polyamid,
b. ein thermoplastisches Polymer.

13. Thermoplastische Polymerzusammensetzung nach Anspruch 12, **dadurch gekennzeichnet, dass** sie zwischen 5 und 30 % modifiziertes Polyamid enthält.

14. Gegenstand, erhalten durch Formen aus dem modifizierten Polyamid nach einem der Ansprüche 1 bis 8 oder dem durch das Verfahren nach einem der Ansprüche 9 bis 11 erhaltenen modifizierten Polyamid oder aus der Zusammensetzung nach Anspruch 12 oder 13, vorzugsweise durch Abformen, Spritzgießen, Spritzblasformen, Extrusionsblasformen, Extrusion, Spinnen oder Folienherstellung.

## Claims

1. Polyamide modified by a compound containing a sulfonate group and being chemically bonded to the polymer chain, the polyamide containing at least one unit containing a sulfonate group, of the following formula (I):
-L-Z-A-Y- SO₃X (I)
wherein:
- XO₃S represents SO₃H or SO₃M, M being a group which replaces the proton H+ of SO₃H to form an inactive salified group,
- -L-Z- is a radical derived from the condensation of two reactive functional groups F₁ and F₂ such that
- F₁ is the precursor of the radical -L- and F₂ the precursor of the radical -Z-,
- A is a covalent bond or an aliphatic hydrocarbon radical capable of containing hetero atoms and containing from 1 to 20 carbon atoms,
- Y is an aromatic radical capable of containing hetero atoms,
said units being present in a proportion at least equal to 5 mol % relative to the total number of moles of units constituting the polymeric chain.

2. Modified polyamide according to Claim 1, **characterized in that** said units are present in a proportion at least equal to 5 mol % relative to the total number of moles of carboxylic diacid units or of diamine units, and/or of aminocarboxylic acid units in the polymeric chain.

3. Modified polyamide according to either of the previous claims, **characterized in that** F₁ is an acid functional group or an amine functional group or derivatives thereof, and F₂ is a functional group reactive towards an acid, amine or derived functional group, F₂ being preferably selected from -Hal (Hal signifies halogen), -COHal, -COOR, anhydride, -CONRR', -CO-R, -NRR', -N=C=O, -OR, -NR-CO-NR'R", -O-CO-OR, -O-CO-NRR', -NR-CO-OR', -SR, R, R' and R", the same or different, being a hydrogen atom or a linear or branched alkyl radical containing from 1 to 18 carbon atoms.

4. Modified polyamide according to one of the previous claims, **characterized in that** -Z- is a group selected from -NR-, -O- and -CO-, =C-R-, -CO-O-, -CO-NH-, R being hydrogen or an alkyl radical with 1 to 18 carbon atoms, preferably between 1 and 4 carbon atoms.

5. Modified polyamide according to one of the previous claims, **characterized in that** M is selected from the alkali and alkaline earth metals.

6. Modified polyamide according to one of the previous claims, **characterized in that** -L-Z- is -NH-CO- or -CO-NH-.

7. Modified polyamide according to one of the previous claims, **characterized in that** it is obtained by using a monofunctional aromatic compound of the following formula (II): 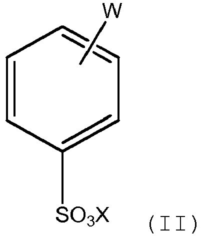 wherein:
- XO₃S represents SO₃H or SO₃M, M being a group which replaces the SO₃H proton to formed an inactive salified group,
- -W being -A-F₂ with A as defined above and F₂ being selected from -Hal (Hal signifies halogen), -COHal, -COOR, anhydride, -CONRR', -CO-R, -NRR', -N=C=O, -OR, -NR-CO-NR'R" , -O-CO-OR, -O-CO-NRR', -NR-CO-OR', -SR, R, R' and R", the same or different, being a hydrogen atom or a linear or branched alkyl radical containing from 1 to 18 carbon atoms.

8. Modified polyamide according to Claim 7, **characterized in that** the monofunctional aromatic compound is sodium-3-carboxybenzenesulfonate.

9. Method for preparation of the modified polyamide according to one of Claims 1 to 8, by introduction of a monofunctional compound containing a sulfonate group, the functional group whereof can react with an amine or acid functional group into the reaction medium in the melted state.

10. Method according to Claim 9, by polymerization of the following monomers in the melted state:
A) at least one monofunctional compound containing a sulfonate group, the functional group whereof can react with an amine or acid functional group
B) at least one compound or a mixture of compounds selected from:
B1) a mixture of diacid and diamine
B2) a lactam or an amino acid
the molar proportion of monomers A) relative to the monomers B) is at least equal to 5%.

11. Method for preparation of the modified polyamide according to one of the previous claims, **characterized in that** a stoichiometric proportion of acid functional groups and amine functional groups contributed by the monomers is introduced into the polymerization medium.

12. Thermoplastic polymer composition comprising:
a. the modified polyamide according to one of Claims 1 to 8 or obtained by the method according to one of Claims 9 to 11
b. a thermoplastic polymer.

13. Thermoplastic polymer composition according to Claim 12, **characterized in that** it contains between 5 and 30% of modified polyamide.

14. Article obtained by shaping from the modified polyamide according to one of Claims 1 to 8 or obtained by the method according to one of Claims 9 to 11, or from the composition according to Claim 12 or 13, preferably by molding, injection molding, injection/blow-molding, extrusion/blow-molding, extrusion, spinning or film production.
